# NEW EUROPEAN PATENT SPECIFICATION

(11) **EP 0 788 295 B2**
(45) Date of publication and mention of the opposition decision: **18.07.2007**
(45) Mention of the grant of the patent: 17.09.2003
(21) Application number: 97300171.2
(22) Date of filing: 13.01.1997
(51) Int. Cl.: H05B 3/86

(54) **Electrically heated window, apparatus and process for the manufacture thereof**
Elektrisch beheizbare Glasscheibe, Vorrichtung und Verfahren für ihre Herstellung
Vitrage à chauffage électrique, appareil et procédé pour sa fabrication

(30) Priority: 30.01.1996 GB 9601868
(43) Date of publication of application: 06.08.1997
(73) Proprietor: PILKINGTON UNITED KINGDOM LIMITED, St. Helens, Merseyside WA10 3TT (GB); PILKINGTON Automotive Deutschland GmbH, 58455 Witten (DE)
(72) Inventor: Castle, Derek Charles, Halesowen, West Midlands B63 1DQ (GB); Chamberlain, Mark Andrew, Birmingham, West Midlands B31 2JH (GB); Müller, Klaus-Peter, 58332 Schwelm (DE); Tysper, Klaus, 44135 Dortmund (DE); Wilberg, Lutz, 58455 Witten (DE)
(74) Representative: Pettet, Nicholas Edward

(56) References cited:
- EP-A- 0 506 521
- EP-A- 0 773 705
- US-A- 3 409 759
- US-A- 5 182 431

## Description

The present invention relates to an electrically heated window, and more particularly but not exclusively to a laminated vehicle window comprising a number of plies, the window including an array of fine, closely spaced wires extending over one of the plies and forming a heating element, the heating effect resulting from passage of electric current through the wires.

Such windows may be installed as the windscreen, rear window, or other window of a car or other vehicle, or as a window (especially the windscreen) of a commercial vehicle, locomotive or aircraft, or in a boat or ship. The electric heating is used to disperse condensation or ice on the surfaces of the window, and thereby maintain good visibility through the window.

At its simplest, a laminated window comprises an inner ply of interlayer material ("the interlayer") disposed between two outer plies of rigid transparent sheet glazing material, but more sophisticated laminated windows comprise greater numbers of plies of interlayer and glazing material, for example so as to confer greater resistance to impact damage upon the window, and reduce the risk of penetration of the window. The interlayer is normally a flexible plastics material, e.g. polyvinylbutyral, and the glazing material may be glass or a rigid plastics material. Laminated windows are also known comprising two or more plies, in which an exposed ply is a ply of flexible plastics material which may both increase penetration resistance and reduce the risk of laceration by fragments of glazing material during an impact Such a plastics outer ply normally forms the inward-facing surface of the window, and is generally subjected to a surface treatment to increase its abrasion resistance.

Although electrically heated windows comprising arrays of wires have been known for a considerable time, the number of different configurations in which the wires can be arranged has remained limited, resulting in various shortcomings in different applications, chiefly arising from an inability to match the shape of the heated area to the shape of the window.

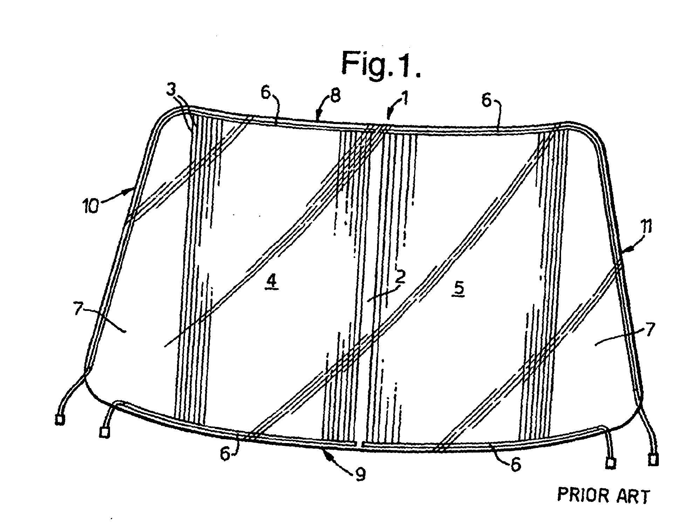

For example, it is known from US 3,729,616 to arrange the wires along parallel straight lines. This document describes a laminated window having a pattern of wrinkled resistance wires with the wrinkles oriented in non-parallel random fashion so as to reduce glare from the wires when the window is used as a windscreen. The heated area is generally rectangular, and when such a pattern is applied to a windscreen which is approximately the shape of a trapezium (i.e. a quadrilateral with only one pair of sides parallel), there are generally triangular areas adjacent each short edge of the windscreen which are unheated. Obviously, any condensation or ice in these unheated areas will remain in place, impairing visibility through the windscreen. The relative size of these unheated areas in modern windscreens is substantial, as for example may be seen in the prior art windscreen shown in Figure 1 of the present application.

GB 1,365,785 is concerned with the problems of electrical discontinuities and resistance varying with path length, but does in fact disclose a different configuration of heating wires. Windows in the shape of a rectangle and a trapezium are described in which the wires run from side to side, not from top to bottom. However, the wires still extend along parallel straight lines, and the shapes of window described (rectangles and straight-edged trapezia) are not typical of the shapes of windows employed in modern vehicles; in reality they have curved edges, and the degree of curvature is tending to increase.

EP 32,139, which corresponds to US 4,395,622, describes heated windows in which the wires are laid along circular arcs extending in the direction of movement of the wiper. The patent teaches that the heated area should be arranged to approximately coincide with the wiped area; a substantial portion of the window is therefore left unheated as in US 3,729,616. Although the suggestion of circular arcs is apparently new, it is only made in the context of improving wiper performance, and does not provide sufficient flexibility in shaping the heated area to meet more general modern needs, given that few windows have edges which are circular arcs.

GB 1,566,681, corresponding to US 4,209,687, addresses the problem of diffractive effects occurring as a result of light passing through fine, closely spaced wires in an electrically heated window. It is suggested that each wire is formed as a helix to alleviate such effects. Neighbouring helices may be disposed in parallel, trapezoidal, meandering or undulating relation according to the pattern desired. However, no indication is given as to how the helices are formed, how they are laid down in these various relationships, or why a particular pattern may be desired, and so this document does not assist the skilled person seeking to arrange heating wires in new configurations.

A need therefore remains for an improved electrically heated window in which the shape of the heated area may be matched to the shape of part or all of the transparent portion of the window. Some of the situations in which such matching is desirable will now be explained in more detail.

As mentioned above, an electrically heated window may be used as the rear window (referred to in the industry as a "backlight") of a vehicle. The heating element may be printed in conductive ink, or (especially where the rear window is laminated) heating may be provided by means of an array of fine, closely spaced wires. Since the car driver's eyes are not as close to the rear window as to the windscreen, minimising visibility of the wires is not as critical as with windscreens. It is possible to use thicker wire at larger spacings when wiring a heated rear window, than when wiring a windscreen, and so reduce costs.

The wires normally extend in a generally horizontal direction in an installed rear window, i.e. from side to side rather than top to bottom. When designing a heated rear window, it is not so important to heat the entire transparent portion of the window, as in a windscreen, because the driver normally does not need to look through the extreme top and bottom portions of a rear window. It is more important to shape the heated area so that it heats the actual portion of the window through which the driver does need to see clearly, while ensuring that the appearance of the window is aesthetically pleasing. Since the shape of the heated area is visible, it has an influence on the overall appearance of the rear window as part of the vehicle. For example, in a car having a deeply bent rear window, the bottom edge of the window may sweep round in a deep curve to meet the boot lid or tailgate. This curve is not circular, generally having a larger radius at the centre than at the sides. In this situation heating wires laid in straight or circular lines would look wrong. Straight lines would also leave an excessively large lower portion of the rear window unheated.

Many cars are equipped with an additional brake or stop lamp mounted on the rear window, generally referred to in the industry as a "high mounted stop lamp". The high mounting position is intended to improve visibility of such stop lamps, but this is clearly not achieved if the portion of the window on which the stop lamp is mounted is covered by frost or snow. It would therefore be desirable to extend the heating wires of an electrically heated rear window to cover such a portion; however this is not normally possible with wires laid in straight or circular lines.

A need therefore also exists for a wire-heated laminated window suitable for use as the rear window of a vehicle, in which the shape of the heated area, in particular the lines followed by the boundaries of the heated area, can be controlled to a greater extent than at present. It is also important to ensure that the heating effect does not vary excessively in intensity over the new shapes of heated area, especially when diverging wires are involved, otherwise the variation in time taken to clear frost or condensation from different areas of the window would be unacceptable in practice.

Another application of an electrically heated window in a vehicle is to release a window wiper (i.e. a windscreen wiper or rear wiper) that has been rendered immobile in its rest position on the windscreen during cold weather, for instance frozen in place by ice formation, or obstructed by an accumulation of fallen snow. Such a window is known from EP 13,970 which corresponds to US 4,373,130. In the window described, the electrical heating element is provided by printing it in a conductive ink, or by coating a selected area of the windscreen with a continuous metal or semi-conductor layer. Not all windscreen factories have the facilities to operate these processes, however, and it would be desirable to provide an alternative way of heating a wiper rest position.

It has now been found that all the failings of the known products mentioned above may be alleviated by providing an electrically heated window in which at least some of the wires are laid along lines configured differently from the straight lines or circular arcs known from the prior art. Whereas it has apparently been the belief in the past that arranging wires in different configurations would not in practice be feasible, it has now been found possibly, surprisingly, to modify in a relatively simple manner as hereinafter described, one of the known types of apparatus for laying down the wires, in order to configure them in new ways in a practical and economical manner. Furthermore, it has been found possible to control the intensity of the heating effect within acceptable limits of variation over the new shapes of heated area.

According to the present invention there is provided an electrically heated window as claimed in claim 1.

By the term "electrical connection means", the skilled person understands in the present context that any of the items generally used in such windows to connect the array of wires are meant, including busbars; leads; tags; plugs, spades and their corresponding sockets. The lines along which the wires extend are imaginary in the sense that, until wires are actually laid along the lines during manufacture of the window, the position of the lines cannot be determined by inspection. The wires themselves may be crimped or otherwise locally bent in a regularly or irregularly repeating fashion to alleviate undesirable optical effects, as will be described in more detail below; it would therefore be imprecise to define the present invention by defining that the wires themselves have non-circular curvature because the present invention is primarily concerned with the configuration and orientation of wires across a window as a whole, and secondarily with smaller scale shaping, e.g. crimping, of the wires. It will be appreciated that it is possible to lay either crimped or uncrimped wires along lines as defined by the present invention.

A line of non-circular curvature is one for which the radius of curvature varies along its length; that is to say, if the radius of curvature were established at intervals along the line, it would be found to vary in magnitude at different points. At least parts of a line may be of sinusoidal, parabolic or hyperbolic curvature. A line may comprise two or more, preferably four, connected circular arcs, each arc having a different radius to the adjacent arc.

Preferably at least some of the lines along which the wires extend are substantially parallel to one edge of the window.

In an embodiment of the invention, the wires extend (with reference to the installed window) from side to side, i.e. generally parallel to the top and bottom of the window. This embodiment is especially suitable for use as a rear window, as in such an arrangement, the invention allows the wires to be configured to heat the area of the window through which the driver normally needs to see, even in a deeply curved rear window. Furthermore, the invention may allow one to avoid heating areas in which the driver does not need especially high visibility, thereby avoiding excessive power consumption. In most rear windows, the edge of the window that constitutes the bottom edge after installation is also the longest edge of the window.

Most vehicle windows (whether windscreens or rear windows or others) are curved, and are installed at a predetermined angle of inclination. Preferably, the wires are arranged to be substantially horizontal when the window is mounted at said predetermined angle.

This is especially advantageous for rear windows, as it means that the upper and lower boundaries of the heated area appear horizontal to the driver when seen by the driver in the rear-view mirror. It can also have the effect of making the heated area of the window blend aesthetically with the styling of the car.

In a further embodiment, the array of wires extends over a portion of the window that serves as a rest position for a window wiper. As mentioned above, the window wiper may be a windscreen wiper or a rear wiper. By placing the wires along non-circular curved lines, it is easier to tailor the shape of the heated area to cover all of the rest position (often referred to as the "parking area") of the wiper. Previously, when the wires were placed along straight lines, this was difficult to achieve. For example, if the wiper parked adjacent the curved lower edge of a windscreen, it was difficult to get the wires close enough to this edge, as inevitably the wire cut a chord across it.

Laying the wires along non-circular curved lines is also advantageous when the wiper is parked on an opaque portion of the window, especially a portion having an obscuration band, since such bands are generally adjacent and parallel to the edges of the window, and thus adopt the curvature of these edges. Placing the wires along suitably curved paths enables all the wires to be laid on the opaque portion, where they are not visible. When, as formerly, the wires could only be placed along straight lines, they again cut a chord across the curvature of the obscuration band; in other words, the wires undesirably transgressed into the transparent portion of the window.

To manufacture the various embodiments of the invention mentioned above, it has been found necessary to improve upon the known processes and apparatus employed in the manufacture of conventional electrically heated windows. In particular, apparatus which has in the past been employed to assemble the array of wires for incorporation as part of the heating element (commonly referred to as a wiring machine) has been found unsatisfactory for providing the variety of configurations of wires desired.

A known apparatus is described in US 3,795,472 (divisional of US 3,729,616, which was mentioned earlier). A wiring machine is provided comprising a rotatably mounted drum with a wire supply device at one side. A sheet of interlayer to be wired is attached to the drum and rotated, while wire is supplied from the wire supply device. This device is caused to move gradually in a direction parallel to the axis of rotation of the drum, so that successive turns of wire are deposited on the interlayer, each turn of wire being in spaced relationship to the previous one to produce a helical coil wrapped around the drum. The coil is cut open along an axial line on the surface of the drum, in the gap between two adjacent edges of the interlayer, and the sheet of interlayer is removed from the drum and placed on one of the plies of glazing material for assembly into a laminated window.

This apparatus yields a product in which the wires are disposed along parallel straight lines, even though, on close inspection, it would not be precise to describe the wires themselves as parallel because of the randomly oriented wrinkles. It is not possible to manufacture the improved wired products mentioned above on this apparatus.

Another wiring machine including a drum is described in EP 443,691. While various improvements over the machine of US 3,795,472 are disclosed, they do not concern the orientation of the lines along which the wires are deposited, which in the finished window are still disposed along straight and parallel lines.

A different type of wiring machine is described in EP 32,139. This comprises a flat table on which a sheet of interlayer is placed, a sliding bridge disposed above the table and spanning it, a wire laying member slidably mounted on the bridge and attached to a connecting rod which pivots about a vertical axis. The wire-laying member slides back and forth on the bridge in reciprocating manner, but because the bridge is itself also free to slide in reciprocating manner, and the wire-laying member is constrained by the connecting rod, the net movement is along a circular path. Two methods of operation of the machine are described; one method producing circular curves of constant radius, and the other producing successive concentric circular curves. This document does not therefore assist the skilled person in producing arrays of wires of the various configurations needed, as described above.

None of these known wiring machines has therefore been found suitable for use in the manufacture of the improved wired products mentioned above.

It has now been discovered that a single improved process and apparatus can make all the improved wired products mentioned above; the underlying advance being to provide an extra degree of freedom of movement to the wire supply and setting device (the "wiring head"), together with associated control means to control the extra movement.

According to these aspects of the invention there is first provided a process for the manufacture of an electrically heated window as claimed in claim I, part of the process being performed on an apparatus which includes an endless support surface, rotatable about an axis, for supporting the interlayer material, and a wiring head for supplying wire and laying it on the interlayer material, the support surface and wiring head being movable relative to each other in a direction parallel to said axis, and the process including the steps of:
- securing a piece of interlayer in position on the support surface,
- causing the support surface to rotate,
- laying wire by setting it in contact with the interlayer material by means of the wiring head while the support surface rotates, so that successive turns of wire are laid on the interlayer material,
- stopping rotation of the support surface when the desired number of turns of wire has been laid,
the process being characterised by
- cutting the coil in a direction parallel to the axis, so that it may be opened out as a generally flat array of wires,
- removing the wired piece of interlayer from the support surface and providing the array of wires with electrical connections, and
- assembling the piece of interlayer material into a laminated window,
wherein while laying the wire the process includes:
- moving the support surface and the wiring head back and forth relative to each other in reciprocating manner in the direction parallel to said axis, and in coordination with the rotation of the support surface, to provide an array of wires on the interlayer material in which at least some of the wires extend along lines of non-circular curvature. Clearly, the relative movement between the support surface and the wiring head may be provided as a result of movement of the support surface alone, or of the wiring head alone, or of both together.

Secondly there is also provided an apparatus for forming an array of wires on a piece of interlayer material during the manufacture of an electrically heated window, as claimed in claim 9.

Preferably, the wiring head is movably mounted on an elongate member which extends parallel to said axis, and is propelled along said elongate member in reciprocating manner by the drive means.

The invention will now be illustrated by the following non-limiting description of particular embodiments with reference to the accompanying drawings in which like reference numerals denote like elements throughout the various figures. In the drawings: -
Figure 1 is a general view of a known electrically heated window, viewed in a direction approximately normal to the surface of the window;
Figure 2 is a general view of an electrically heated window for explanation only, which is suitable for use as a windscreen, viewed in a corresponding direction to Figure 1;
Figure 3 is a greatly enlarged cross-sectional view of a small marginal part of the window of Figure 2, taken on the line III-III of Figure 2;
Figure 4 is a general view of an embodiment of electrically heated window, which is suitable for use as a rear window, again viewed in a corresponding direction to Figures 1 and 2;
Figure 5 is a perspective view of the rear part of a car equipped with a heated rear window according to another version of this embodiment of the invention, i.e. it is similar to the window shown in Figure 4 but more deeply bent;
Figure 6 is a plan view of an array of heating wires disposed upon a piece of interlayer material for the window of Figure 5;
Figure 7 is a general view of a further embodiment of electrically heated window, again viewed in a corresponding direction to Figures 1, 2 and 4;
Figure 8 is a perspective view of an apparatus for laying heating wires to make a window according to the invention, including an endless support surface in the form of a cylindrical drum;
Figure 9a is a diagram representing the cylindrical support surface of the drum of Figure 8 as a flat rectangle, so that the entire surface may be seen at the same time, showing schematically how wires may be laid when making two prior art windows of the type shown in Figure 1;
Figure 9c is a similar diagram to Figure 9a showing schematically how wires may be laid for a window according to the embodiments of the invention.

Figure 1 shows a known electrically heated window 1 suitable for use as the windscreen of a vehicle. It comprises an area 2 heated by an array of fine, closely spaced wires 3. The wires are arranged in two heating elements 4 and 5 extending between respective busbars 6, by means of which electric current is supplied to the two elements independently.

It will be appreciated that as the heating wires are positioned very close to one another in heated windows of the type described in this specification, it is not possible to represent in the drawings all the wires that are actually present in such windows. Consequently it should be understood that only a proportion of the heating wires are shown in the drawings of this specification, and they are shown further apart than is actually the case. Furthermore, to avoid excessive repetition for the draughtsman, where the area covered by wires is relatively large, no wires have been drawn in over part of the area. Instead, dot-dashed lines have been used to indicate the extent of the area covered by wires.

The window 1 is generally in the shape of a trapezium, with generally parallel edges 8 and 9, and non-parallel edges 10 and 11. All these edges are slightly curved.

The result of providing a heated area 2 comprising wires extending along parallel straight lines is that the heated area is rectangular, and so two generally triangular areas 7 remain unheated. Unfortunately it is not feasible to simply continue the straight, parallel wires across areas 7, because the resistance, and hence the length, of each wire 3 should be maintained approximately constant if satisfactory performance (i.e. reasonably uniform heating) is to be obtained.

A window having heating wires extending along parallel straight lines (as shown in Figure 1) may be made using the prior art apparatus known from EP 443 691 for laying the heating wires.

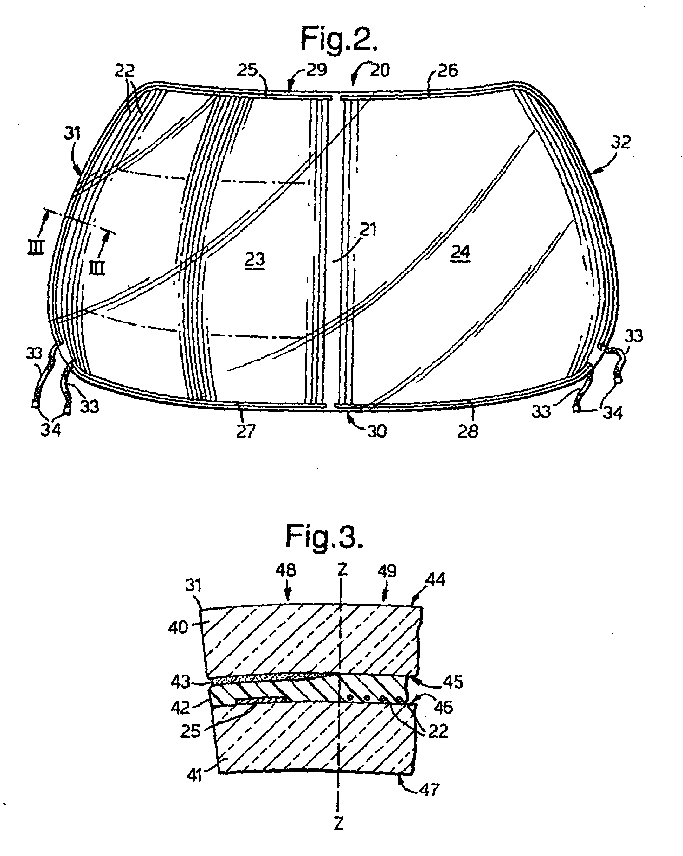

Figure 2 shows an electrically heated window for explanation only. This window 20 is suitable for use as a heated vehicle windscreen, and is heated by a heating means which extends over substantially the whole of the transparent portion of the window. The window has long edges 29 and 30, and short edges 31 and 32, the long edges being substantially parallel so that the window has the general shape of a trapezium, allowing for the curvature of the edges. When the window is installed in the orientation which is usual for a windscreen, long edge 29 forms the top edge, long edge 30 forms the bottom edge, and short edges 31,32 form the sides of the windscreen.

Figure 3 is a cross-section of the window 20 taken along the line III-III of Figure 2. The window comprises two plies of sheet glazing material which may be curved, the ply forming the external surface 44 of the window 20 being designated the outer ply 40, and the ply forming the inner surface 47 of the window (i.e. the surface of the window which, after glazing, faces towards the inside of the object, e.g. a vehicle, to be glazed by the window) being designated the inner ply 41. While plies 40,41 may be composed of any rigid transparent sheet glazing material (e.g. various plastics), a preferred material is glass. The plies have further surfaces 45, 46 which are bonded together to form a laminate by a ply of interlayer material 42, which is transparent in the finished product, extending between the plies of glazing material. The interlayer is generally composed of a plastics material with suitable physical and chemical properties to bond the plies of glazing material together, and confer on the product the requisite performance for its application e.g. in terms of safety, optical performance etc. A suitable interlayer material is polyvinylbutyral ("pvb"), but other interlayer materials may be used. As mentioned above, other constructions of laminated windows exist which involve more or fewer plies.

Still referring to Figure 3, a substantially opaque band 43 (known in the vehicle glazing industry as an obscuration band) is disposed around the periphery of one face of one of the plies, preferably the inner face 45 of the outer ply 40. The obscuration band 43 may be in the form of a printed coating composed of a ceramic (frit-based) ink. The obscuration band serves to hide the receiving flange of the vehicle bodywork when the windscreen is glazed in position; and when the window is adhesively glazed, the band not only conceals but also protects the adhesive and/or sealant from light, especially its ultra-violet component. In this specification, references to a transparent portion of the window are references to the portion not obscured by the obscuration band. In Figure 3, an imaginary line Z-Z is shown dividing the opaque portion 48 from the transparent portion 49.

Preferably the obscuration band 43 is disposed on inner face 45 of the outer ply 40 because in this position, the band is additionally able to conceal from external view components, e.g. busbars, situated on a peripheral surface of the ply of interlayer 42. For this reason, the obscuration band has been omitted from Figure 2 in order to reveal the busbars. If the obscuration band is disposed on a different surface, for example surface 47, it is possible to apply an organic primer to the inner face 45 instead, so that components situated on a peripheral surface of the ply of interlayer are still concealed.

Referring to Figure 2 again, the window 20 is heated by heating means comprising an array 21 of fine, closely spaced wires 22 disposed on a surface of one of the plies, preferably on the inner face of the ply of interlayer material, although it is entirely possible to carry out the invention with the wires disposed on the outer face of the ply of interlayer material, or in the middle of the ply, especially if it is a composite ply. Indeed, the invention also includes windows in which the wires are disposed on a face of one of the other plies, providing they are suitably protected. The array may comprise two or more heating elements 23,24, each element having its own current supply. This arrangement is preferable for large windows since such windows, when supplied with power from a standard nominal 12 volt vehicle supply, draw a substantial current Splitting the array into independently supplied elements reduces the load on the various electrical connection means which supply current to each element; clearly the number of elements may be varied according to the size of the windscreen.

In the window of Figure 2, two elements 23 and 24 extend between electrical connection means in the form of respective busbars. Accordingly there are two busbars *25,26* which extend along at least the top edge 29 of the windscreen, and two busbars 27,28 which extend along the bottom edge 30. The busbars are made from electrically conductive strip, normally metal strip, for example, copper strips 3-6 mm wide, preferably 6 mm wide and about 0.04-0.08 mm thick. The strips are preferably tinned with a surface layer of tin, or tin lead alloy (Sn:Pb ratio of 60:40) to protect the copper from oxidation.

In this windscreen, the top busbars 25,26 extend around the top corners, and down the sides 31,32 of the windscreen. The busbars 25,26,27,28 may be connected to flying leads 33 by soldering, possibly via a small connector tag of known design for neatness (not shown), and the leads have terminations 34 appropriate for connection to a voltage supply. Alternatively, conventional spade connectors may be soldered to the ends of the busbars, and leads attached to the spades. These leads, tags, terminations and connectors also constitute electrical connection means.

The wires 22 are preferably attached to the strip forming the busbars 25,26,27,28 by use of a further piece of busbar strip (not shown) to form a sandwich with the wires between the two strips, a face of at least one of the busbar strips being provided with a surface layer of low melting point solder such that the solder melts on autoclaving to provide good electrical contact between the busbar strip and the wires. Such a technique is known from EP 385 791.

The wires 22 are preferably composed of tungsten, and are preferably 10-30 µm thick for a nominal operating voltage of 12 volts; typically, the array 21 of wires for a windscreen may include between 300 and 900 wires according to the size of the windscreen and the wire spacing used. A backlight may include between about 10 and 300 wires. The wires are arranged to extend along lines of non-circular curvature, and in this embodiment, the lines have been selected so that the array 21 of wires extends over substantially the whole of the transparent portion 49 (as indicated in Fig. 3) of the window. Hence the wires extend along lines which diverge in a direction from one long edge (top edge 29) to the other, generally parallel, long edge (bottom edge 30).

As this particular window is of greatest width a short way above bottom edge 30, there is also a lesser degree of convergence of the lines as they approach the bottom edge; overall, however, the lines diverge downwards. The wires may be said to fan out, and as a result the wires adjacent the short edges 31 and 32 are substantially parallel to those respective edges. Clearly, this arrangement of wires may also be described as extending along lines which, overall, converge in a direction upwards from the bottom edge 30 to the top edge 29.

References in this specification to the shape of a line along which a heating wire extends (e.g. as "straight", or of "non-circular curvature") are, unless otherwise indicated, references to the shape of the line when the piece of interlayer material is placed on a flat surface. When the interlayer material is assembled into a curved window, in the course of which it is placed between curved plies of sheet glazing material, the lines obviously adopt the curvature of the glazing material, and so the shape of the lines is modified from the shape they had when the interlayer material was flat. The extent of this modification depends on the depth and radius of curvature of the window.

As has already been mentioned, the window 20 of Figures 2 and 3 is particularly suitable for use as a windscreen of a vehicle. It is known to those skilled in the art, that when a bright light from a point source, such as one of the headlights of an oncoming vehicle, shines through a windscreen having an array of fine, closely spaced wires, undesirable secondary optical effects may occur (believed to be due to reflections from the wires) which disrupt the vehicle driver's vision through the windscreen. As is common practice in the art, the wires 22 of window 20 normally have undulations to alleviate these effects, e.g. they are crimped in a sinusoidal pattern. Other patterns may be used, such as a zig-zag, or a helical spiral, or indeed the undulations may be random in nature.

It may be important to ensure that the particular arrangement of wires selected for a window, especially a windscreen, provides a moderately uniform heating effect (as measured, for example, in terms of heating power density) over the heated area. The uniformity of heating effect is influenced by the spacing and resistance of the wires, and so these factors should be controlled when designing new configurations of wires. It has been found that the maximum spacing of the majority of wires in the transparent portion of a windscreen should not exceed 10 mm, preferably it is less than 5 mm, and it may be desirable to keep the spacing to 3 mm or less, especially in critical areas such as the primary vision area. In a rear window, the maximum spacing of the wires should not exceed 30 mm, preferably it is less than 20 mm, and more preferably less than 10 mm. Adjacent wires should not touch each other, so the minimum spacing is governed by the accuracy with which wires can be positioned during laydown, and the degree of crimp in use. Preferably, the resistance of the shorter wires is at least 50% of that of the longer wires, more preferably it is at least 70%, and in instances where particular uniformity of heating is required, it is at least 80%.

Control of these factors makes it possible to keep the ratio of the maximum heating power density to the minimum heating power density measured in different locations on a window such as a windscreen to less than 2.0, preferably less than 1.5, and more preferably less than 1.3. The variation in heating power density in a backlight may be similar, or the wires may be intentionally arranged in closely spaced groups of two or three to achieve very rapid localised clearing of ice or condensation adjacent each group. This results in the formation of horizontal clear "slots" through which some rearward vision may be obtained well before the whole of the heated area of the backlight has cleared.

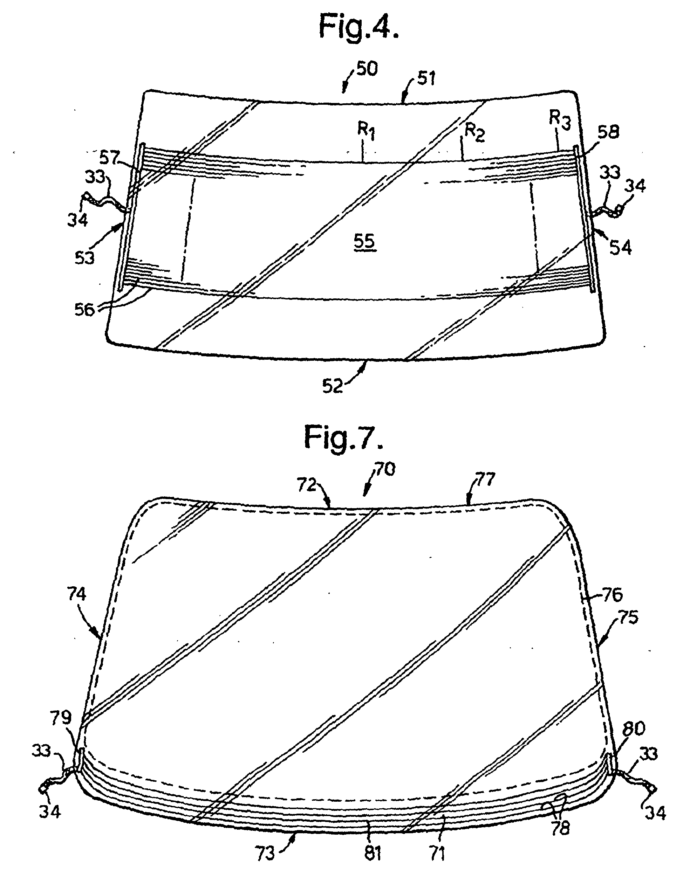

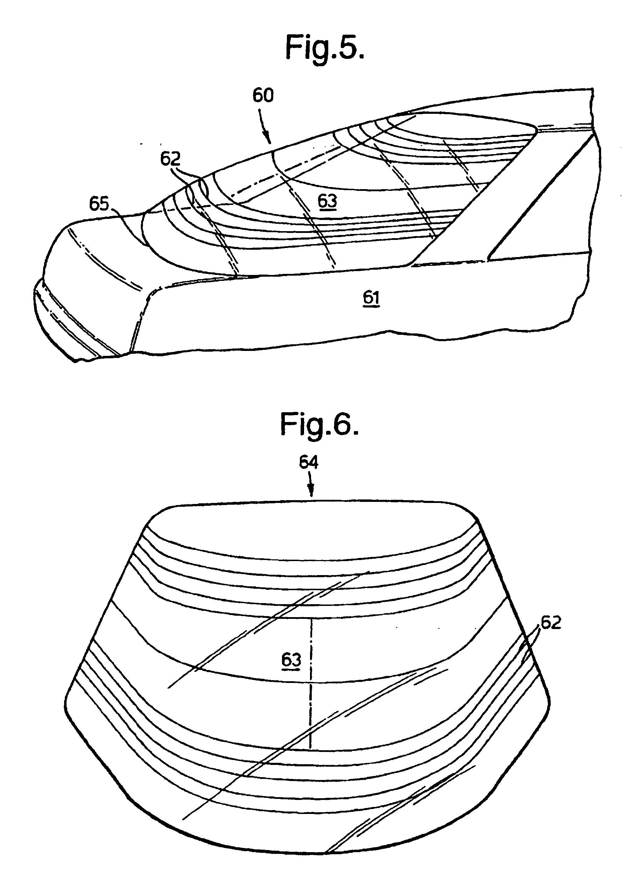

Figure 4 shows an embodiment of electrically heated window according to the invention, this embodiment being particularly suitable for use as the rear window or backlight of a vehicle. Many aspects of this window 50 are the same as, or equivalent to, the corresponding aspects of the window 20 described above (Figures 2 and 3) and so these aspects will not be described further here, or in connection with the further embodiment below. Such aspects include the composition of the window, i.e. from plies of glazing material and interlayer material; use and details of any obscuration band; and the materials used for the wires, busbars and their connection.

Window 50 is approximately in the shape of a trapezium, having two slightly curved long edges 51,52 (52 being the longest edge) which are substantially parallel, and two slightly curved short edges or sides 53,54 which are not parallel. An array 55 of fine, closely spaced wires 56 extends from a first busbar 57 to a second busbar 58. The wires extend along lines of non-circular curvature which are substantially parallel to long edges 51 and 52 of the window. The window is curved and is intended to be installed at a predetermined angle of inclination, and the curvature of the wires is chosen so that the wires are substantially horizontal when the window is mounted at said predetermined angle. In fact, taking into account the curvature of the window, each wire then extends in one of a series of substantially horizontal parallel planes. The nature of the non-circular curvature of the lines required to achieve this effect depends on the curvature of the window. Most vehicle windows exhibit greater curvature towards their sides, that is, sides 53,54 in Figure 4. For example, for a particular window, the radius of curvature R of a line along which a wire extends may vary from R₁ = 1240 mm at the midpoint, to R₃ = 1090 mm near the side, possibly via an intermediate radius R₂ at an intermediate point. For another window, R₁ might be 4000 mm, R₂ might be 3800 mm, and R₃ might be 3000 mm. The locations of R₁, R₂ and R₃ are marked on Figure 4.

The above configuration allows efficient use to be made of the area heated by the array 55, so as to improve vision for the vehicle driver. It also yields an aesthetically pleasing external appearance to the vehicle; if the wires were laid along straight lines, in the installed window they would approach closer to the roofline in the centre of the window, and the shape of the heated area would be out of sympathy with the shape of the window in styling terms.

As mentioned above, the adverse optical effect of the wires on visibility for the driver is not as severe for a rear window as for a windscreen because the rear window is further from the driver's eyes. Hence the wires 56 of the rear window 50 need not be as fine and as closely spaced as for a windscreen. Similarly, it is not usually necessary to use undulating wire, e.g. crimped wire.

Figure 5 shows a different version of this embodiment of the invention. The window 60 of Figure 5 is again intended for use as a rear window of a vehicle (of which part of the bodywork 61 is shown), but the window is more deeply bent and is not in the shape of a trapezium. In order to heat the desired area in this window, not only are the wires 62 laid along lines of non-circular curvature, but the spacing of the wires varies along their length, i.e. the wires diverge towards the centre of the window.

Figure 6 shows the array 63 of wires 62 for the window 60 of Figure 5. The array is shown lying flat on a piece of interlayer material 64, i.e. before assembly of the window. The shape of the array is designed so that the wires are again substantially horizontal in the installed window as shown in Figure 5.

Still referring to Figure 5, it can be seen that at least some of the wires extend along lines which are substantially parallel to the longest edge, i.e. the bottom edge 65, of the window. It should be noted that the busbars and any obscuration band have been omitted from Figures 5 and 6 for simplicity.

Should it be desired to include one or more high mounted stop lamps on the inside of the rear window, so that the lamp is viewed through the window, the heated area may be extended accordingly. Generally, such a lamp is mounted either at the top or bottom centre of the rear window, in which case either the top or bottom boundary respectively of the heated area is positioned sufficiently high or low on the window to ensure that the part of the window through which the lamp is viewed is kept free from ice or condensation.

Figure 7 shows a further embodiment of the invention, comprising a window 70 with an electrically heated wiper parking area, i.e. the array 81 of wires forming the heating element extends over a portion 71 of the window 70 that serves as a rest position for a window wiper when not in use. The remaining portion of the window may be provided with an additional heating element. The window 70 has long edges 72,73 and short edges or sides 74,75, and may be a windscreen or a rear window. In the former case, the portion 71 serving as a rest position may extend below the bonnet line of the vehicle, so that the wipers park out of sight. In either case, the window may have an opaque portion forming an obscuration band as described in connection with Figures 2 and 3. A possible position for the inner boundary of an obscuration band is shown as dashed line 76; to show the band as an opaque area would obviously obscure part of the drawing. The outer boundary of the obscuration band is very close to, or coincident with, the periphery 77 of the window. Preferably the wires 78 are disposed on the opaque portion of the window formed by the obscuration band.

The advantages of the wires extending along lines of non-circular curvature are readily seen from Figure 7. The wires 78 may extend along lines of relatively large radius of curvature which are substantially parallel to the longest edge 73 of the window along the central part of that edge, but towards the comers, the curvature of the lines may increase to enable the busbars 79,80 to be situated conveniently close to the sides 74,75 of the window. If the wires extended along arcs of circles, it would not be possible to position them as close to long edge 73 while also keeping the busbars immediately adjacent the sides 74,75, which is generally preferable for easy connection to the wiring loom of the vehicle. In the extreme case of the wires extending along straight lines, they would either lie too far removed from the wiper rest position, or it would be necessary to introduce a third busbar in the centre of long edge 73, so that the wires could be arranged in two banks at an angle to each other, with the third busbar common to both banks. This solution would be both inelegant and expensive.

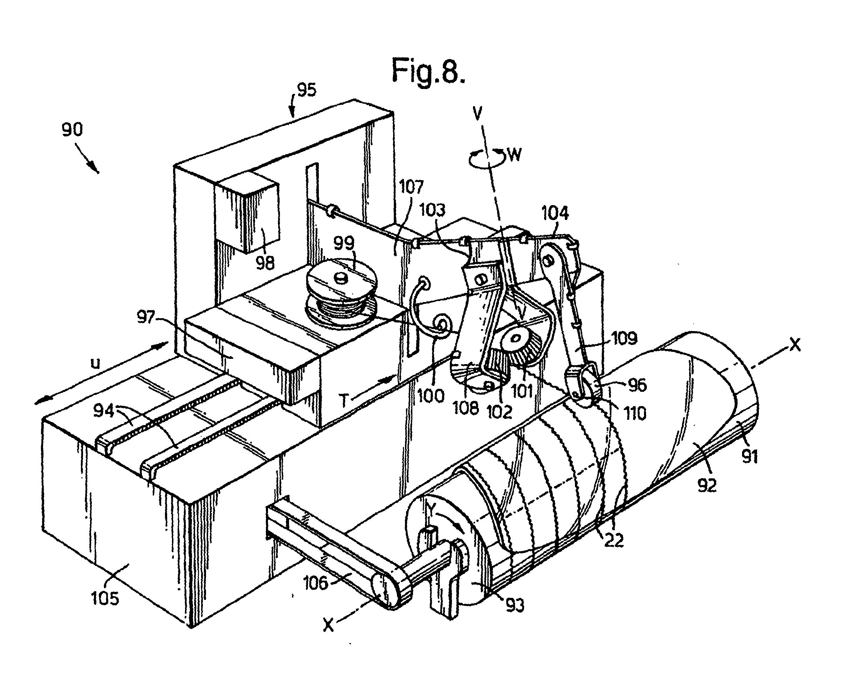

Figure 8 shows an apparatus 90 for laying heating wires along lines of non-circular curvature in the various configurations required for the embodiments described above. It comprises a base 105, a wiring head 95 and an endless support surface 91 for the piece or pieces of interlayer material 92 ("the interlayer"). The support surface 91 is provided by the curved surface of a cylindrical drum 93, which is rotatable in the direction of arrow Y about an axis of rotation represented by dashed line X-X. The drum 93 is driven by belt 106 transmitting power from a motor (not shown) within the base 105. Support surface 91 may be perforated and the internal air pressure of the drum 93 may be reduced to retain pieces of interlayer in contact with it. The interior of the drum may for instance be connected to an external suction means.

The preferred way of providing relative movement between the support surface 91 and the wiring head 95 is to mount the latter on an elongate member for sliding movement in a direction parallel to the axis of rotation of the drum X-X. In Figure 8, the elongate member is in the form of two rails 94 which extend parallel to the axis X-X, and are displaced to one side of drum 93. Other arrangements for providing translational movement of the wiring head are possible.

The wiring head 95 comprises devices for the supply of wire and for laying it on the piece of interlayer 92. Wire is supplied from a spool of wire 99, which may additionally be provided with means for unwinding the wire, via wire guide means such as pulleys or eyes 100, and set in contact with the interlayer by means of a put-down roller 96. The spool and wire guide means are arranged to impart a slight tension to the wires, which assists in keeping the wire correctly threaded and under control.

Preferably, the wiring head also comprises means for imparting undulations to the wire for use when wiring a piece of interlayer for a windscreen, e.g. meshed pinions or bevel gears 101,102 through which the wire is fed so as to crimp it The wire guide means, crimp gears and put-down roller are all mounted on an arm 107, the crimp gears being mounted on the arm via an auxiliary frame 108, and the put-down roller via a pivotable link 109.

A preferred way of ensuring that the wire adheres to the interlayer after being set in contact with it is to heat the wire, since interlayer becomes tacky when hot, so hot wire tends to adhere to the interlayer. A preferred method of heating the wire is to pass an electric current through it, so preferably the wiring head includes means for applying a voltage across a length of wire close to where it is set in contact with the interlayer. A convenient way of achieving this is to apply a voltage between the put-down roller 96 and the crimp gears 101,102, by means of electrical leads 103,104 attached to a voltage source (not shown).

The put-down roller 96 is rotatable about an axis 110 passing through its centre, so that it can roll over the interlayer as it presses the hot wire into the surface of the interlayer. In order to accommodate changes in the direction of the curved lines along which wire is laid, the put-down roller and part of the arm 107 can also be swivelled about a second axis substantially at right angles to the axis of rotation of the put-down roller. Such a second axis is shown by line V-V in Figure 8, and arrow W shows the direction of swivelling. The axis V-V about which the roller, link and arm may be swivelled is preferably oriented substantially at right angles to a tangent to the support surface 91 taken at the point at which the put-down roller 96 makes contact with it (or with the interlayer). As an alternative to swivelling the put-down roller and other parts of the wiring head 95, just the put-down roller 96 and its mounting link 109 may be swivelled by themselves. In this case, the swivel axis is translated towards the put-down roller, so as to pass through the point of contact between the put-down roller and the interlayer on the support surface, and a second wire guide means (not illustrated) may be provided adjacent the put-down roller to assist in keeping the wire in place on the put-down roller when the latter swivels.

The wiring head 95 also includes drive means 97, e.g. an electric motor, for propelling the wiring head back and forth along rails 94 in a reciprocating sliding manner, as indicated by arrow U. This reciprocating motion is in addition to an advancing motion indicated by arrow T, in other words, the drive means is capable of advancing the wiring head from one end of the drum to the other, as well as causing it to reciprocate during the course of such advancement. The various motions of which the drive means 97 is capable are controlled by control means 98, which is preferably an NC (numerical control) control means, and which coordinates the reciprocating movement of the wiring head with the rotation of the drum. Further details of the known aspects of this apparatus are available from EP 443 691.

Although only one piece of interlayer material 92 is visible in Figure 8, it is desirable to be able to wire two or more pieces at once. Figure 8 shows wires being laid on one piece of interlayer 92 (the "wiring" of the piece of interlayer) for the manufacture of a windscreen. However, one advantage of the machine 90 is its versatility, it being possible to wire two or more pieces in one operation, or to wire pieces of different shapes with different configurations of wires to make the differing embodiments of window described above.

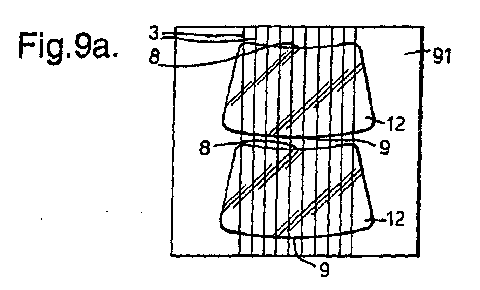

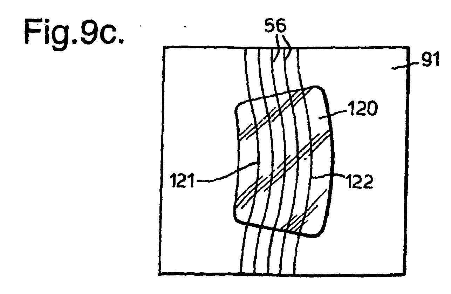

Figure 9 shows some examples of the various wire configurations which are possible. In Figure 9a, an arrangement is shown for wiring two pieces of interlayer 12 for making the prior art window of Figure 1. Finally, in Figure 9c an arrangement is shown for making the window of Figure 4, which with slight modification is also suitable for the windows of Figures 5 and 7 as well. In each case, the cylindrical endless support surface 91 of the drum 93 has been represented as a rectangle, as if the surface had been cut open and flattened out.

An important consideration in arranging the interlayer on the support surface is to save space so that, where possible, two or more pieces of interlayer may be wired in one operation. Obviously the underlying factors here are the size of the window to be made compared with the size of the drum. According to Figure 9a, the pieces of interlayer 12 are placed on the surface 91 with the curvature of the generally parallel long edges 8,9 facing the same way. This allows the pieces of interlayer to "nest" and thereby be placed as close to each other as possible, so the size of interlayer pieces which can be wired in pairs on a given drum can be maximised.

However, with this arrangement of pieces of interlayer, it is more difficult to lay the wires extending along diverging lines which are generally parallel to the short edges 31,32 of the pieces, because the wire would have to turn two sharp corners in the area between the two pieces of interlayer to be re-aligned for the next piece. Hence a different arrangement of the interlayer pieces may be adopted which allows wiring to be carried out more quickly and reliably, although, as it does not make such efficient use of space on the support surface, one might initially be reluctant to consider it.

Figure 9c shows a preferred arrangement for a piece of interlayer 120 intended for the manufacture of a heated rear window such as that shown in Figure 4, in which the wires 56 extend generally in the direction of the longer dimension of the piece. If the support surface 91 is large enough, two such pieces may be wired side by side in one operation, e.g. by using two wiring heads coupled together and controlled by a single control means 98.

A preferred way of programming the control means to lay wires in a desired configuration will now be described. When making the window of Figure 4 for example, the approach is to define the non-circular curved lines 121,122 (Figure 9c) along which the top and bottom wires respectively are to be laid. The curves of the intermediate lines are then calculated by interpolation, resulting in a continuous change of the lines from top to bottom. If each line is made up of e.g. three or four arcs of circular curvature connected end to end, calculation is simplified.

Of course, it is possible to program the control means either to lay the wires at constant spacing, or to lay the wires at a different density in certain areas of the window.

Similarly, to lay wires as shown in Figure 6 (to make the window of Figure 5), the curvature of the lines along which the top and bottom wires are laid is defined and a corresponding program for this window is created. It can thus be seen how the wiring configurations shown in Figure 9 may be modified to suit other windows.

Calculation of the curved lines may either be done by the NC control means itself, or preferably by a separate computer to allow the use of a simpler control means.

The manufacture of a heated window according to the invention, including the operation of the wiring apparatus 90, will now be described with particular emphasis on the novel aspects.

A piece of interlayer cut to the appropriate shape and size for the window to be manufactured is placed on a horizontal surface in a clean environment. Lengths of tinned copper strip are placed in position on the interlayer to serve as part of the busbars, and secured in place. The piece of interlayer is then transferred to the endless support surface 91 of the wiring apparatus 90, and secured in place by conventional means as known from EP 443 691. A second piece of interlayer may similarly be placed on the drum as explained above.

During the laying down of wire, the drum 93 rotates and the wiring head 95 advances along the rails 94, as known from EP 443 691. Additionally, reciprocation of the wiring head along the rails 94 is coordinated with the rotation of the drum. The head may perform an integral number of reciprocations for each revolution of the drum, so that after each complete revolution of the drum, the wiring head almost returns to its starting position, but not quite, the difference being equal to the spacing of successive turns of wire on the drum. When the drum holds two pieces of interlayer for a windscreen, or one for a rear window as shown in Fig 9c, the movement of the wiring head is synchronised with the rotation of the drum, so that the wiring head performs one reciprocation for each revolution of the drum. The combination of the rotation of the drum and the movement of the wiring head results in the wire being laid along lines of non-circular curvature. A coil of wire is built up on the drum, but unlike the prior art process, it is not a helical coil, as each turn of the coil is distorted from a spiral by the reciprocation of the wiring head.

The amplitude of reciprocation is varied according to the position of the wiring head 95 along the rails 94. For a windscreen wired from top to bottom, the amplitude is greatest when the wiring head is at either extreme of its travel along the rails, and smallest at the midpoint. In fact, if the windscreen is to have a wire laid along a straight line, such as its centre line (i.e. along its axis of mirror symmetry), then during the laying of this wire the wiring head does not reciprocate at all. For a rear window wired in accordance with Figure 9c, the wiring head need not travel the full working length of the rails 94.

The speed at which the wiring head slides along the rails, as it reciprocates during the wiring of a piece of interlayer, varies according to the amplitude of reciprocation, for a given rate of revolution of the drum. When the amplitude is greater, the wiring head needs to travel a greater distance along the rails per reciprocation, and so it slides at a correspondingly greater speed.

One of the advantages of this process is that it is possible to wire pieces of interlayer quickly and hence economically. Although precise times vary, e.g. according to the number of wires in the window being manufactured, the time taken to wire one or two pieces of interlayer (i.e. the number of pieces that may be placed on the support surface together) is less than 3 hours, and may be less than 2 hours, or even less than 1 hour.

When wiring is complete, piece(s) of interlayer are then removed from the drum and again placed flat on a horizontal surface. Further lengths of tinned copper strip are laid on top of the previously positioned strips where the wires cross them, and soldered in position so that the busbar is of two-layer or "sandwich" construction, as taught by EP 385 791, in the region where the wires make contact with the busbars.

The window is completed by performing steps which are known, and hence described only briefly. Further electrical connection means (e.g. flying leads, connectors etc.) are attached, and the wired piece of interlayer is placed between complementary curved plies of glazing material. Air is then removed from the assembly, and it is subjected to high temperature and pressure in an autoclave so that the interlayer material bonds the plies of glazing material together. If low melting point solder was pre-applied to the lengths of busbar strip, then this fuses in the autoclave and ensures good electrical connection between the wires and the busbar.

## Claims

1. An electrically heated window (20,50,60,70) having two long edges (51, 52; 72, 73) and two short edges (53, 54 ; 74, 75) laminated from at least two plies (40,41) of glazing material and at least one ply of interlayer material (42) extending between the plies of glazing material, the window including:
- an array (21) of fine, closely spaced wires (22) carried by one of the plies, the wires extending from one short edge to the other
- electrical connection means (25-28) for connecting the array to an electrical supply so as to pass current through the wires and heat the window,
**characterised by** at least some of the wires extending along lines of non-circular curvature for which the radius of curvature varies along their length and the curvature of the lines increasing towards the short edges of the window.

2. A window as claimed in claim 1, wherein at least some of the lines along which the wires extend are substantially parallel to one edge of the window.

3. A window as claimed in any preceding claim, wherein the ratio of the maximum heating power density to the minimum heating power density measure in different locations on the window is less than 2.0.

4. A window as claimed in claim 3, wherein the ratio is less than 1.5.

5. A window as claimed in claim 2, wherein at least some of the lines along which the wires extend are substantially parallel to the longest edge of the window.

6. A window as claimed in claim 1, which is curved, and is intended to serve as a vehicle glazing closure which is installed at a predetermined angle of inclination, and wherein the wires are arranged to be substantially horizontal when the window is mounted at said predetermined angle.

7. A window as claimed in claim 1, wherein the array of wires extends over a portion of the window that serves as a rest position for a window wriper.

8. A window as claimed in claim 7, wherein at least some of the wires are disposed on an opaque portion of the window.

9. An apparatus (90) for forming an array (21) of wire (22) on a piece of interlayer material (92) during the manufacture of an electrically heated window according to claim 1, the apparatus including an endless support surface (91), mounted for rotation about an axis, for supporting the interlayer material, and a wiring head (95) for supplying wire and laying it on the interlayer material, the support surface and the wiring head being arranged for relative movement in a direction parallel to said axis so as to advance the wiring head (95) relative to the endless support surface (91), the wiring head including means for applying a voltage across a length of wire close to where it is set in contact with the interlayer material **characterised by** drive means (97) for causing the support surface and wiring head to reciprocate relative to each other in said direction during the course of such advancement and control means (98) for controlling the drive means to coordinate the reciprocating movement with the rotation of the support surface, so that the wiring head lays wire along lines of non-circular curvature.

10. An apparatus as claimed in claim 9, wherein the wiring head is movably mounted on an elongate member which extends parallel to said axis, and is propelled along said elongate member in reciprocating manner by the drive means.

11. An apparatus as claimed in claim 9 or claim 10, wherein the wiring head includes a put-down roller rotatable about a first axis for setting the wire in contact with the interlayer material, the roller being mounted for swivelling movement about a second axis perpendicular to the first axis, so that the roller may swivel to follow a curved line along which wire is being laid.

12. A process for the manufacture of an electrically heated window as claimed in claim 1, part of the process being performed on an apparatus according to claim 9 and the process including the steps of:
- securing a piece of interlayer in position on the support surface,
- causing the support surface to rotate,
- laying wire by setting it in contact with the interlayer material by means of the wiring head while the support surface rotates, so that successive turns of wire are laid on the interlayer material,
- stopping rotation of the support surface when the desired number of turns of wire has been laid,
the process being **characterised by**:
- cutting the coil in a direction parallel to the axis, so that it may be opened out as a generally flat array of wires,
- removing the wired piece of interlayer from the support surface and providing the array of wires with electrical connections, and
- assembling the piece of interlayer material into a laminated window,
wherein while laying the wire the process includes:
- moving the support surface and the wiring head back and forth relative to each other in reciprocating manner in the direction parallel to said axis, and in coordination with the rotation of the support surface, to provide an array of wires on the interlayer material in which at least some of the wires extend along lines of non-circular curvature.

13. A process as claimed in claim 12, wherein the number of reciprocations that the wiring head performs for each revolution of the support surface is an integer.

14. A process as claimed in claim 13, wherein the relative reciprocating movement of the wiring head and the support surface is synchronized so that the wiring head performs one reciprocation for each revolution of the support surface.

15. A process as claimed in claim 14, wherein the piece of interlayer material is in the approximate shape of a trapezium, thereby having two generally parallel edges, and two such pieces are placed on the support surface with the longer of the parallel edges of each piece adjacent each other, so that they are in an opposed mirroring relationship.

16. A process as claimed in any one of claims 12 to 15, wherein the amplitude of reciprocation of the wiring head varies with its position along the line parallel to said axis.

17. A process as claimed in claim 16, wherein the amplitude is greatest when the wiring head is at either extreme of its travel relative to the interlayer material, and the amplitude is smallest when the wiring head is at the midpoint of its travel relative to the interlayer material.

## Patentansprüche

1. Elektrisch beheiztes Fenster (20, 50, 60, 70) mit zwei langen Kanten (51, 52; 72, 73) und zwei kurzen Kanten (53, 54; 74, 75), das aus mindestens zwei Lagen (40, 41) von Verglasungsmaterial und mindestens einer Lage (42) von Zwischenschichtmaterial geschichtet hergestellt wird, die sich zwischen den Lagen von Verglasungsmaterial erstreckt, wobei das Fenster aufweist:
- eine Anordnung (21) von dünnen, nahe beieinander liegenden Drähten (22), die von einer der Lagen getragen werden, wobei die Drähte sich von einer kurzen Kante zur anderen erstrecken,
- elektrische Verbindungsmittel (25-28) zum Verbinden der Anordnung mit einer Stromversorgung, um Strom durch die Drähte zu schicken und das Fenster zu beheizen,
**dadurch gekennzeichnet, dass** mindestens einige der Drähte entlang von Linien mit einer nicht-kreisförmigen Krümmung verlaufen, deren Krümmungsradius im Verlauf ihrer Länge variiert und die Krümmung der Linien zu den kurzen Kanten des Fensters hin zunimmt.

2. Fenster nach Anspruch 1, wobei mindestens einige der Linien, entlang derer die Drähte verlaufen, im wesentlichen parallel zu einer Kante des Fensters liegen.

3. Fenster nach einem der vorhergehenden Ansprüche, wobei das Verhältnis der maximalen Heizleistungsdichte zur minimalen Heizleistungsdichte, gemessen an verschiedenen Stellen des Fensters, weniger als 2,0 beträgt.

4. Fenster nach Anspruch 3, wobei das Verhältnis weniger als 1,5 beträgt.

5. Fenster nach Anspruch 2, wobei zumindest einige der Linien, entlang derer die Drähte verlaufen, im wesentlichen parallel zur längsten Kante des Fensters liegen.

6. Fenster nach Anspruch 1, das gekrümmt ist und als Fahrzeugverglasung dienen soll, die in einem vorbestimmten Neigungswinkel installiert wird, und wobei die Drähte so angeordnet sind, dass sie im wesentlichen waagrecht liegen, wenn das Fenster mit dem vorbestimmten Winkel montiert wird.

7. Fenster nach Anspruch 1, wobei die Anordnung von Drähten sich über einen Bereich des Fensters erstreckt, der als Ruhestellung für einen Scheibenwischer dient.

8. Fenster nach Anspruch 7, wobei zumindest einige der Drähte in einem undurchsichtigen Bereich des Fensters angeordnet sind.

9. Vorrichtung (90) zur Bildung einer Anordnung (21) von Drähten (22) auf einem Zwischenschichtmaterialteil (92) während der Herstellung eines elektrisch beheizten Fensters nach Anspruch 1, wobei die Vorrichtung eine zur Drehung um eine Achse montierte, endlose Auflagefläche (91), um das Zwischenschichtmaterial zu tragen, und einen Drahtverlegungskopf (95) für die Zufuhr von Draht und zu seinem Verlegen auf dem Zwischenschichtmaterial aufweist, wobei die Auflagefläche und der Drahtverlegungskopf für eine relative Bewegung in einer Richtung parallel zur Achse angeordnet sind, um den Drahtverlegungskopf (95) bezüglich der endlosen Auflagefläche (91) vorwärts zu bewegen, wobei der Drahtverlegungskopf Mittel zum Anlegen einer Spannung über eine Drahtlänge nahe der Stelle aufweist, an der er mit dem Zwischenschichtmaterial in Kontakt gebracht wird, **gekennzeichnet durch** Antriebsmittel (97), um die Auflagefläche und den Drahtverlegungskopf während einer solche Vorwärtsbewegung zueinander in der genannten Richtung hin und her zu bewegen, und **durch** Steuermittel (98) zur Steuerung der Antriebsmittel, um die Hin- und Herbewegung mit der Drehung der Auflagefläche so zu koordinieren, dass der Drahtverlegungskopf den Draht entlang von Linien mit nicht-kreisförmiger Krümmung verlegt.

10. Vorrichtung nach Anspruch 9, wobei der Drahtverlegungskopf beweglich auf einem länglichen Glied montiert ist, das sich parallel zur Achse erstreckt, und entlang des länglichen Glieds vom Antriebsmittel in Hin- und Herbewegung angetrieben wird.

11. Vorrichtung nach Anspruch 9 oder 10, wobei der Drahtverlegungskopf eine Verlegerolle aufweist, die um eine erste Achse drehbar ist, um den Draht mit dem Zwischenschichtmaterial in Kontakt zu bringen, wobei die Rolle für eine Schwenkbewegung um eine zweite Achse senkrecht zur ersten Achse montiert ist, so dass die Rolle schwenken kann, um einer gekrümmten Linie zu folgen, entlang der Draht verlegt wird.

12. Verfahren zur Herstellung eines elektrisch beheizten Fensters gemäß Anspruch 1, wobei ein Teil des Verfahrens in einer Vorrichtung gemäß Anspruch 9 durchgeführt wird, und das Verfahren die folgenden Schritte aufweist:
- Befestigen eines Zwischenschichtteils in Stellung auf der Auflagefläche,
- Drehen der Auflagefläche,
- Verlegen von Draht **dadurch**, dass er mit Hilfe des Drahtverlegungskopfes mit dem Zwischenschichtmaterial in Kontakt gebracht wird, während die Auflagefläche dreht, so dass aufeinanderfolgende Drahtwindungen auf das Zwischenschichtmaterial gelegt werden,
- Anhalten der Drehung der Auflagefläche, wenn die gewünschte Anzahl von Drahtwindungen verlegt wurde,
wobei das Verfahren **gekennzeichnet ist durch**:
- Schneiden des Drahtbundes in einer Richtung parallel zur Achse, so dass er als eine allgemein flache Anordnung von Drähten auseinandergefaltet werden kann,
- Entfernen des verdrahteten Zwischenschichtteils von der Auflagefläche und Versehen der Anordnung von Drähten mit Stromanschlüssen, und
- Einsetzen des Zwischenschichtmaterialteils in ein Mehrschicht-Fenster,
wobei das Verfahren während des Verlegens des Drahts aufweist:
- das Bewegen der Auflagefläche und des Drahtverlegungskopfes vorwärts und rückwärts zueinander in einer Hin- und Herbewegung in der Richtung parallel zur Achse und in Koordination mit der Drehung der Auflagefläche, um eine Anordnung von Drähten auf dem Zwischenschichtmaterial zu liefern, in der mindestens einige der Drähte entlang von Linien mit nicht-kreisförmiger Krümmung verlaufen.

13. Verfahren nach Anspruch 12, wobei die Anzahl der vom Drahtverlegungskopf für jede Umdrehung der Auflagefläche ausgeführten Hin- und Herbewegungen eine ganze Zahl ist.

14. Verfahren nach Anspruch 13, wobei die relative Hin- und Herbewegung des Drahtverlegungskopfes und der Auflagefläche so synchronisiert wird, dass der Drahtverlegungskopf für jede Umdrehung der Auflagefläche eine Hin- und Herbewegung ausführt.

15. Verfahren nach Anspruch 14, wobei das Zwischenschichtmaterialteil in etwa die Form eines Trapezes aufweist, wodurch es zwei allgemein parallele Kanten aufweist, und zwei solche Teile auf der Auflagefläche mit den längeren der parallelen Kanten jedes Teils so zueinander benachbart angeordnet werden, dass sie ein entgegengesetztes Spiegelverhältnis haben.

16. Verfahren nach einem der Ansprüche 12 bis 15, wobei die Weite der Hin- und Herbewegung des Drahtverlegungskopfes mit seiner Stellung entlang der Linie parallel zur Achse variiert.

17. Verfahren nach Anspruch 16, wobei die Weite am größten ist, wenn der Drahtverlegungskopf sich an einem der Enden seines Wegs in Bezug auf das Zwischenschichtmaterial befindet, und die Weite am kleinsten ist, wenn der Drahtverlegungskopf sich am Mittelpunkt seines Wegs in Bezug auf das Zwischenschichtmaterial befindet.

## Revendications

1. Vitre (20, 50, 60, 70) chauffée électriquement, ayant deux bords longs (51, 52 ; 72, 73) et deux bords courts (53, 54 ; 74, 75), feuilletée à partir d'au moins deux épaisseurs de matériau vitreux (40, 41) et au moins une épaisseur de matériau entre couches (42) s'étendant entre les épaisseurs de matériau vitreux, la vitre comportant :
- un réseau (21) de fins fils (22) étroitement espacés, portés par l'une des épaisseurs, les fils s'étendant d'un bord court à l'autre,
- un moyen (25 - 28) formant connexion électrique pour connecter le réseau à une source d'alimentation électrique de manière à faire passer un courant dans les fils et à chauffer la vitre,
**caractérisée en ce qu'**au moins certains des fils s'étendent le long de lignes de courbure non circulaire pour lesquelles le rayon de courbure varie le long de leur longueur, et la courbure des lignes augmentant vers les bords courts de la vitre.

2. Vitre selon la revendication 1, dans laquelle au moins certaines des lignes le long desquelles s'étendent les fils sont sensiblement parallèles à un bord de la vitre.

3. Vitre selon l'une des revendications précédentes,
dans laquelle le rapport de la densité maximum de puissance de chauffage à la densité minimum de puissance de chauffage, mesuré en différents endroits sur la vitre, est inférieur à 2,0.

4. Vitre selon la revendication 3, dans laquelle le rapport est inférieur à 1,5.

5. Vitre selon la revendication 2, dans laquelle au moins certaines des lignes le long desquelles les fils s'étendent sont sensiblement parallèles au bord le plus long de la vitre.

6. Vitre selon la revendication 1, qui est courbe, et est destinée à servir de fermeture à glace d'un véhicule, qui est installée à un angle d'inclinaison prédéterminé, et
dans laquelle les fils sont agencés pour être sensiblement horizontaux lorsque la vitre est montée audit angle prédéterminé.

7. Vitre selon la revendication 1, dans laquelle le réseau de fils s'étend sur une partie de la vitre qui sert de position de repos pour un balai d'essuie-glace de vitre.

8. Vitre selon la revendication 7, dans laquelle au moins certains des fils sont disposés sur une partie opaque de la vitre.

9. Appareil (90) pour former un réseau (21) de fils (22) sur un élément de matériau (92) entre couches au cours de la fabrication d'une vitre chauffée électriquement selon la revendication 1, l'appareil comportant une surface de support sans fin (91) montée pour une rotation autour d'un axe, pour supporter le matériau entre couches, et une tête de câblage (95) pour l'alimentation en fil et sa pose sur le matériau entre couches, la surface de support et la tête de câblage étant agencées pour un mouvement relatif dans une direction parallèle audit axe, afin de faire avancer la tête de câblage (95) par rapport à la surface de support sans fin (91), la tête de câblage comprenant un moyen pour appliquer une tension à une longueur du fil proche d'où il est mis en contact avec le matériau entre couches,
**caractérisé par** un moyen d'entraînement (97) pour amener la surface de support et la tête de câblage à être animées d'un mouvement de va-et-vient l'une par rapport à l'autre dans ladite direction au cours de cette avance, et un moyen de commande (98) pour commander le moyen d'entraînement pour coordonner le mouvement de va-et-vient avec la rotation de la surface de support, de telle sorte que la tête de câblage pose un fil le long de lignes de courbure non circulaire.

10. Appareil selon la revendication 9, dans lequel la tête de câblage est montée de manière mobile sur un élément de forme allongée qui s'étend parallèlement audit axe, et est propulsée le long dudit élément de forme allongée selon un mouvement de va-et-vient par le moyen d'entraînement.

11. Appareil selon la revendication 9 ou la revendication 10, dans lequel la tête de câblage comporte un rouleau abaisseur pouvant être mis en rotation autour d'un premier axe pour mettre le fil en contact avec le matériau entre couches, le rouleau étant monté pour un mouvement de pivotement autour d'un deuxième axe perpendiculaire au premier axe, de telle sorte que le rouleau peut pivoter pour suivre une ligne courbe le long de laquelle le fil est posé.

12. Procédé pour la fabrication d'une vitre chauffée électriquement selon la revendication 1, une partie du procédé étant mise en oeuvre sur un appareil selon la revendication 9, et le procédé comportant les étapes:
- de fixation d'un élément d'entre couches en position sur la surface de support,
- d'amenée de la surface de support à être mise en rotation,
- de pose du fil par une mise en contact de celui-ci avec le matériau entre couches au moyen de la tête de câblage, tandis que la surface de support est mise en rotation, de telle sorte que des spires successives de fil sont posées sur le matériau entre couches,
- d'arrêt de la rotation de la surface de support lorsque le nombre souhaité de spires de fil a été posé, le procédé étant **caractérisé par** :
- une découpe de la bobine dans une direction parallèle à l'axe, de telle sorte qu'elle peut être ouverte sous la forme d'un réseau de fils généralement plats,
- un retrait de l'élément d'entre couches câblé de la surface de support, et une fourniture au réseau de fils, de connexions électriques, et
- un assemblage de l'élément de matériau entre couches dans une vitre feuilletée,
dans lequel, tout en posant le fil, le procédé comporte:
- un déplacement de la surface de support et de la tête de câblage en arrière et en avant l'une par rapport à l'autre dans un mouvement de va-et-vient dans la direction parallèle audit axe, et en coordination avec la rotation de la surface de support, pour obtenir un réseau de fils sur le matériau entre couches dans lequel au moins certains des fils s'étendent le long de lignes de courbure non circulaire.

13. Procédé selon la revendication 12, dans lequel le nombre de mouvements de va-et-vient que la tête de câblage effectue pour chaque révolution de la surface de support, est un nombre entier.

14. Procédé selon la revendication 13, dans lequel le mouvement relatif de va-et-vient de la tête de câblage et de la surface de support est synchronisé, de telle sorte que la tête de câblage effectue un mouvement de va-et-vient pour chaque révolution de la surface de support.

15. Procédé selon la revendication 14, dans lequel l'élément de matériau entre couches se présente sous la forme approximative d'un trapèze, ayant donc deux bords généralement parallèles, et deux de ces éléments sont placés sur la surface de support avec le plus long des bords parallèles de chaque élément adjacents les uns aux autres, de telle sorte qu'ils sont dans une relation miroir opposée.

16. Procédé selon l'une quelconque des revendications 12 à 15, dans lequel l'amplitude du mouvement de va-et-vient de la tête de câblage varie avec sa position le long de la ligne parallèle audit axe.

17. Procédé selon la revendication 16, dans lequel l'amplitude est la plus grande lorsque la tête de câblage est à l'une ou l'autre extrémité de son trajet par rapport au matériau entre couches, et l'amplitude est la plus petite lorsque la tête de câblage est au milieu de son trajet par rapport au matériau entre couches.
